# EUROPÄISCHE PATENTSCHRIFT

(11) **EP 4 158 214 B1**
(45) Veröffentlichungstag und Bekanntmachung des Hinweises auf die Patenterteilung: **08.07.2026**
(21) Anmeldenummer: 21727798.7
(22) Anmeldetag: 18.05.2021
(51) Int. Cl.: F16D 1/076, F16H 55/08

(54) **HIRTH-VERZAHNUNG MIT SEKUNDÄRPROFILWINKEL**
HIRTH COUPLING WITH SECONDARY PROFILE ANGLE
RACCORD HIRTH AVEC ANGLE DE PROFIL SECONDAIRE

(30) Priorität: 28.05.2020 DE 102020114275
(43) Veröffentlichungstag der Anmeldung: 05.04.2023
(73) Patentinhaber: Voith Patent GmbH, 89522 Heidenheim (DE)
(72) Erfinder: GLASER, Thomas, 89551 Königsbronn (DE); SCHMID, Hannes Florian, 89173 Lonsee (DE); KRÄMER, Markus, 89564 Nattheim (DE); TRAUB, Alexander, 89542 Herbrechtingen (DE)
(74) Vertreter: Voith Patent GmbH - Patentabteilung
(86) Internationale Anmeldenummer: PCT/EP2021/063063
(87) Internationale Veröffentlichungsnummer: WO 2021/239502

(56) Entgegenhaltungen:
- EP-A1- 2 181 277
- WO-A1-2014/146892
- CN-A- 106 735 603
- DE-A1- 102008 057 383
- DE-A1- 102014 224 355

## Beschreibung

Die Erfindung betrifft ein Verfahren zur Herstellung eines Maschinenelements, welches eine Hirth-Verzahnung umfasst, die mehrere zentralsymmetrische Zähne und dazwischenliegende Zahnlücken aufweist. Weiterhin bezieht sie sich auf ein mit diesem Verfahren hergestelltes Maschinenelement. Maschinenelemente mit Hirth-Verzahnung werden vorwiegend eingesetzt, um Drehmoment von einem Maschinenelement auf ein weiteres Maschinenelement zu übertragen. Auch hochgenaue Positionier- und Ausrichtaufgaben können dadurch wiederholbar realisiert werden. Insbesondere wenn hohe Drehmomente bei kleinem Bauraum und geringem Gewicht übertragen werden sollen, bietet sich die Hirth-Verzahnung an. Sie ist eine axial wirksame, stirnseitige Plan-Kerbverzahnung. Zudem ist sie selbstzentrierend und mit spielfreiem Formschluss auch verschleißfrei.

In DE 102016012947 A1 werden Maschinenelemente mit Hirth-Verzahnung beschrieben. Sie dienen hier zur stirnseitigen Verbindung zweier Wellenstücke.

Weitere Verbesserungen für Hirth-Verzahnungen sind beispielsweise aus der DE 102014224355 A1 und aus der DE 102008057383 A1 bekannt.

Die Zähne einer Hirth-Verzahnung sind besonders hoch belastet, insbesondere am Übergang von Zahnflanke und Zahnfußbereich. Deshalb werden solche Maschinenelemente aus hochfesten, metallischen Werkstoffen, insbesondere aus hochfestem Stahl hergestellt. Die Bearbeitung hochfester Werkstoffe ist aufwendig und erfordert zahlreiche Bearbeitungsschritte, um sowohl die hochgenaue und maßhaltige Formgebung als auch die gewünschten Festigkeitseigenschaften des fertigen Maschinenelements zu erreichen. Nachteilig ist der damit verbundene Fertigungsaufwand für Hirth-Verzahnungen. Die Herstellung von Hirth-Verzahnungen unterscheidet sich deutlich von der Herstellung einfacher Verzahnungen bei Stirn- oder Kegelrädern.

Die Aufgabe der Erfindung ist es, ein Verfahren zur Herstellung eines Maschinenelements mit Hirth-Verzahnung zu entwickeln, das eine einfachere Fertigung ermöglicht und eine hohe Belastbarkeit der Verzahnung bietet, sowie ein entsprechendes Maschinenelement bereitzustellen.

Die Aufgabe wird durch ein Verfahren zur Herstellung eines Maschinenelements gemäß Anspruch 1 gelöst. Weiterhin wird sie durch ein Maschinenelement gemäß Anspruch 10 gelöst. Weitere vorteilhafte Merkmale sind in den jeweiligen abhängigen Ansprüchen genannt.

Bei der Herstellung der Verzahnung sind mehrere Teilschritte notwendig. Zunächst werden in der Vorbearbeitung die Zahnlücken hergestellt, zum Beispiel durch Fräsen, insbesondere mithilfe von Formfräsern, oder durch Schleifen, wodurch der vorbearbeitete Rohling entsteht. Danach wird der vorbearbeitete Rohling meist einer Wärmebehandlung unterzogen und so unter anderem gehärtet und gegebenenfalls verfestigt. Abschließend folgt die Fertigbearbeitung als Hartfeinbearbeitung, bei der das Profil der Zähne exakt herausgearbeitet wird, wodurch das Maschinenelement entsteht. Dies kann durch Schleifen erfolgen.

Der vorbearbeitete Rohling ist im erfindungsgemäßen Verfahren so gestaltet, dass jeder Zahn eine Zahnflanke mit einem Profilwinkel und eine Sekundärflanke mit einem Sekundärprofilwinkel, sowie einen Zahnfußbereich aufweist, wobei die Sekundärflanke kontinuierlich tangential in den Radius des Zahnfußbereichs übergeht und wobei der Sekundärprofilwinkel kleiner als der Profilwinkel ist. Erfindungsgemäß ist am vorbearbeiteten Rohling im Bereich der Zahnflanke nach der Vorbearbeitung und vor der Fertigbearbeitung ein Schleifaufmaß an Material vorhanden und im Bereich der Sekundärflanke ist kein Schleifaufmaß nach der Vorbearbeitung und vor der Fertigbearbeitung vorhanden. Ein solcher Rohling weist noch ein Schleifaufmaß im Bereich der Zahnflanke auf, ist aber ansonsten, was die Herstellung der Verzahnung und Wärmebehandlung angeht, schon entsprechend der fertigen Form der Verzahnung des Maschinenelements vorbearbeitet. Die Herstellung der Verzahnung beim Vorbearbeiten erfolgt bevorzugt durch Fräsen, insbesondere mithilfe von Formfräsern.

Dadurch dass der Zahn zwischen der Zahnflanke, die die Last trägt, und dem Zahnfußbereich noch eine Sekundärflanke mit kleinerem Winkel als dem Profilwinkel aufweist, lässt sich die Bearbeitung bei der Herstellung der Verzahnung deutlich verbessern. Um die exakte Zahnkontur herzustellen, wird das zusätzliche im Schleifaufmaß vorhandene Material beim Fertigbearbeiten, bevorzugt ausgeführt als Fertigschleifen, abgetragen. Im Bereich der Sekundärflanke ist hingegen kein Schleifaufmaß nach der Vorbearbeitung und vor dem Fertigschleifen vorhanden. Dieser Bereich wird beim Fertigschleifen nicht mehr bearbeitet. Das vereinfacht die gesamte Fertigung ohne die Festigkeit zu reduzieren.

Bei der Hirth-Verzahnung nach dem Stand der Technik weist die Zahnflanke meist nur einen einzigen Profilwinkel auf und geht direkt in den Radius des Zahnfußbereiches über. Um bei der Hartfeinbearbeitung der Zahnflanke keine Schwächung des Zahnes durch Schleifkerben zu verursachen, muss immer der gesamte Zahnfußbereich mit ausgeschliffen werden. Nur so ist eine gleichmäßige Oberflächenqualität erreichbar. Nachteilig dabei ist, dass durch das Schleifen die mit der zuvor erfolgten Wärmebehandlung eingebrachten Eigenspannungen zum Teil wieder freigesetzt werden und so eine unerwünschte Abnahme der Oberflächenfestigkeit sowie eine Formänderung eintritt.

Ein wesentlicher Vorteil der erfindungsgemäßen Ausführung ist, dass das exakte Schleifen der Zahnflanke ohne komplettes Ausschleifen des Zahnfußbereiches erfolgen kann und gleichzeitig keine Schleifkerben am Ende des Schleifbereiches auftreten. Das Werkzeug kann beim Schleifen den gesamten Bereich der Zahnflanke bearbeiten, das Schleifaufmaß im Bereich der Zahnflanke abtragen und dann ins Leere laufen, ohne dass es in Kontakt mit der nachfolgenden Fläche der Sekundarflanke kommt, da der Sekundärprofilwinkel kleiner als der Profilwinkel ist und da im Bereich der Sekundärflanke kein Schleifaufmaß am vorbearbeiteten Rohling vorhanden ist. Die durch die Wärmebehandlung und durch die gegebenenfalls eingesetzten Oberflächen-Verfestigungsverfahren, z.B. durch Kugelstrahlen, am vorbearbeiteten Rohling eingebrachten Eigenspannungen bleiben im besonders hoch belasteten Zahnfußbereich komplett erhalten. Zudem kann die Schleifbearbeitung optimiert werden.

Zusätzlich ist es von Vorteil, wenn im Zahnfußbereich kein Schleifaufmaß nach der Vorbearbeitung und vor dem Fertigschleifen vorhanden ist. Auch dieser Bereich kann dann beim Fertigschleifen ausgespart werden, mit den zuvor genannten Verbesserungen.

Insbesondere kann das Schleifaufmaß vorteilhafterweise mindestens 0,01 mm, bevorzugt mindestens 0,1 mm betragen. So ist genug Material vorhanden, um eine gute Oberfläche bei exakter Zahnkontur zu erreichen. Die Obergrenze für das Schleifaufmaß beträgt maximal 1 mm, damit nicht unnötig viel Material abgetragen werden muss.

Ein besonders vorteilhaftes Maß für die Abweichung der Sekundärflanke vom verlängerten Verlauf der Zahnflanke ist, wenn der Sekundärprofilwinkel α2 mindestens 5% und höchstens 30% kleiner als der Profilwinkel α1 ist. Ist der Sekundärprofilwinkel zu klein, also die Abweichung vom Profilwinkel zu hoch, wird die Zahndicke im Zahnfußbereich zu stark reduziert. Das würde die Festigkeit vor allem in Bezug auf die Biegebeanspruchung des Zahns reduzieren. Ist die Abweichung zu gering, also der Sekundärprofilwinkel zu groß und damit zu nah am Profilwinkel, besteht weiterhin die Gefahr von verbleibenden Schleifkerben im Übergangsbereich zur Sekundärflanke. Noch vorteilhafter ist es, wenn der Sekundärprofilwinkel α2 mindestens 10% und höchstens 25% kleiner als der Profilwinkel α1 ist.

In einer erfindungsgemäßen besonders bevorzugten Ausführung beträgt die Länge der Sekundärflanke entlang des Zahnprofils zwischen dem Ende der Zahnflanke und dem Beginn des Radius des Zahnfußbereichs mindestens 0,05 mm, bevorzugt mindestens 0,1 mm, und höchstens 2 mm, bevorzugt höchstens 0,5 mm. Insbesondere beträgt die Länge der Sekundärflanke entlang des Zahnprofils höchstens 20%, bevorzugt höchstens 15% der Länge der Zahnflanke entlang des Zahnprofils beträgt. Durch die Beschränkung der Länge der Sekundärflanke wird die Minderung des Traganteils der Flanke begrenzt.

Vorteilhafterweise liegt der Profilwinkel α1 im Bereich zwischen einschließlich 35° bis einschließlich 75°, damit erfolgt die Kraftübertragung über die Flankenfläche.

Insbesondere wird das erfindungsgemäße Verfahren so ausgeführt, dass die Sekundärflanke und der Zahnfußbereich beim Fertigschleifen, also bei der Hartfeinbearbeitung nicht bearbeitet werden. Dadurch bleiben die Eigenspannungen aus der Vorbearbeitung, Wärmebehandlung und gegebenenfalls der Oberflächenverfestigungsverfahren erhalten.

Durch den kleineren Sekundärprofilwinkel kann der Zahngrundradius im Zahnfußbereich vergrößert werden, was die Kerbwirkung im Zahnfußbereich reduziert und somit die Tragfähigkeit erhöht. Der Radius im Zahnfußbereich kann bis zu 15% größer sein, als es bei einer Ausführung mit nur einem Profilwinkel gegeben wäre. Die Absolutmaße des Radius hängen vom Durchmesser und der Zähnezahl ab. Bevorzugt liegt der Radius im Zahnfußbereich zwischen einschließlich 0,1 mm und einschließlich 10 mm.

Weiterhin ergeben sich Vorteile für ein Maschinenelement, das in einem erfindungsgemäßen Verfahren hergestellt wurde.

In einer Ausführung sind die Zähne so gestaltet, dass eine Gegenkopfkante beim Eingriff mit einem zweiten Maschinenelement mit Hirth-Verzahnung im Bereich der Sekundärflanke oder im Übergang zum Zahnfußbereich liegt. Die Gegenkopfkante ist die Kante des Zahnkopfes der im Eingriff befindlichen Verzahnung. So ist gewährleistet, dass ein möglichst großer Traganteil genutzt wird und gleichzeitig ein ausreichendes Kopfspiel zwischen Gegenkopfkante und Zahngrund vorhanden ist.

Besonders gut lässt sich die erfindungsgemäß hergestellte Verzahnung auf ein kraftübertragendes und/oder positionierendes Maschinenelement anwenden, das als Zahnring oder als Gelenk einer Gelenkwelle oder als Kupplungsteil oder als Getriebeteil ausgeführt ist. Ebenso kann das Maschinenelement als Scheibe oder Welle von Pumpen, Verdichtern oder Turbinen ausgeführt sein.

Zusätzlich können erfindungsgemäß hergestellte Maschinenelemente in einer Zahnkupplung bestehend aus zwei Maschinenelemente mit je einer Hirth-Verzahnung verwendet werden, wobei zumindest eines der beiden Maschinenelemente erfindungsgemäß hergestellt ist. Die Paarung eines erfindungsgemäß hergestellten Maschinenelements mit einem Maschinenelement, welches eine Hirth-Verzahnung nach dem Stand der Technik aufweist, ist unter Einhaltung des geforderten Spitzenspiels sowie im Fall von Zahnringen dem definierten Zusammenbaumaß möglich.

Besonders bevorzugt besteht die Zahnkupplung aus zwei erfindungsgemäß hergestellten Maschinenelementen mit je einer Hirth-Verzahnung.

Unter Zahnkupplung wird hier die Verbindung zweier drehbarer Maschinenteile über eine drehfeste Verzahnung verstanden.

Anhand von Ausführungsbeispielen werden weitere vorteilhafte Merkmale der Erfindung erläutert unter Bezugnahme auf die Zeichnungen.
**Fig. 1** schematische Darstellung einer erfindungsgemäß hergestellten Zahnkupplung
**Fig.2** erfindungsgemäß hergestellter Zahnring mit Schnittansicht
**Fig.3** Zahnlücke einer Hirth-Verzahnung nach dem Stand der Technik
**Fig.4** Zahnlücke einer erfindungsgemäß hergestellten Hirth-Verzahnung mit Darstellung des Schleifaufmaßes

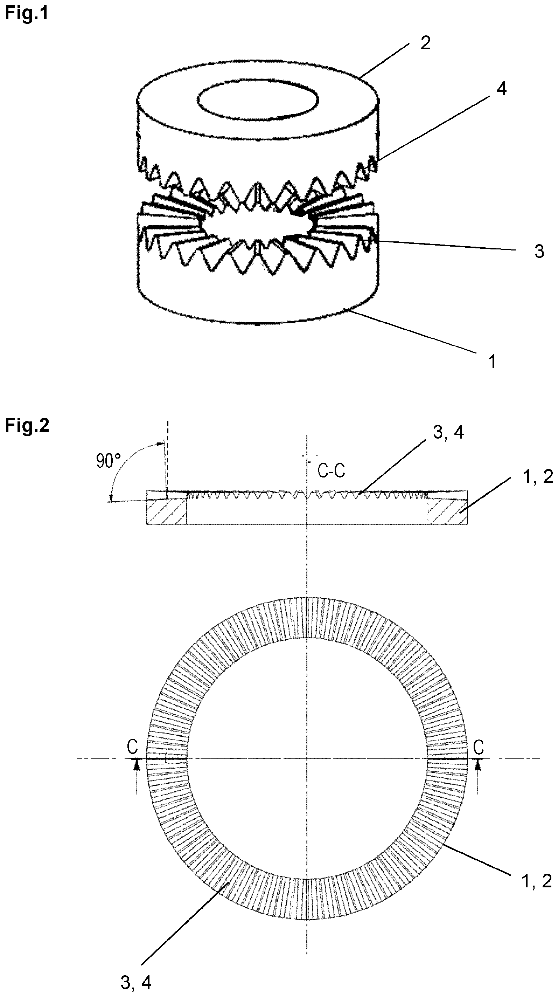

Die **Fig.1** zeigt eine Zahnkupplung mit zwei erfindungsgemäß hergestellten Maschinenelementen 1 und 2, die hier jeweils als Zahnring ausgebildet sind. Sowohl das erste Maschinenelement 1 als auch das zweite Maschinenelement 2 weisen jeweils eine Verzahnung 3,4 auf, die als Hirth-Verzahnung mit Sekundärflanke ausgeführt sind und aus einem erfindungsgemäß vorbearbeiteten Rohling hergestellt wurden. Zudem ist die Paarung zweier Maschinenelementen 1 und 2 möglich, bei denen nur eine der Verzahnungen 3,4 als erfindungsgemäß hergestellte Hirth-Verzahnung ausgeführt ist. Die genaue Kontur der Zahnflanken ist in dieser Darstellung nicht erkennbar. Die beiden Maschinenelemente 1,2 können über die erste Verzahnung 3 und die zweite Verzahnung 4 in Eingriff gebracht werden, so dass zuverlässig und spielfrei ein hohes Drehmoment übertragen werden kann. Das erfindungsgemäß hergestellte Maschinenelement kann nicht nur, wie hier beispielhaft gezeigt, als Zahnring ausgeführt sein, sondern kann auch ein anders gestaltetes Maschinenelement sein, welches eine erfindungsgemäß hergestellte Hirth-Verzahnung 3,4 aufweist.

**Fig.2** stellt im unteren Bereich die Draufsicht und im oberen Bereich die Schnittansicht entlang der Linie C-C für einen Zahnring 1,2 mit Hirth-Verzahnung 3,4 dar. Eine Hirth-Verzahnung 3,4 ist eine stirnseitige Plan-Kerbverzahnung. Zu erkennen ist, dass der Zahngrund radial nach außen abfällt. Die Zahndicke und ebenso die Zahnhöhe nehmen radial nach außen zu.

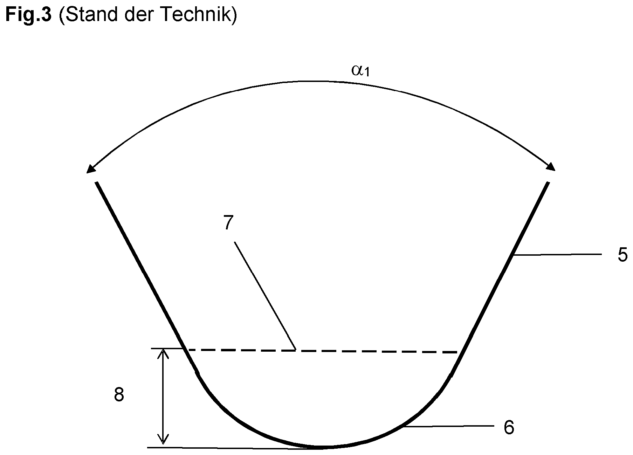

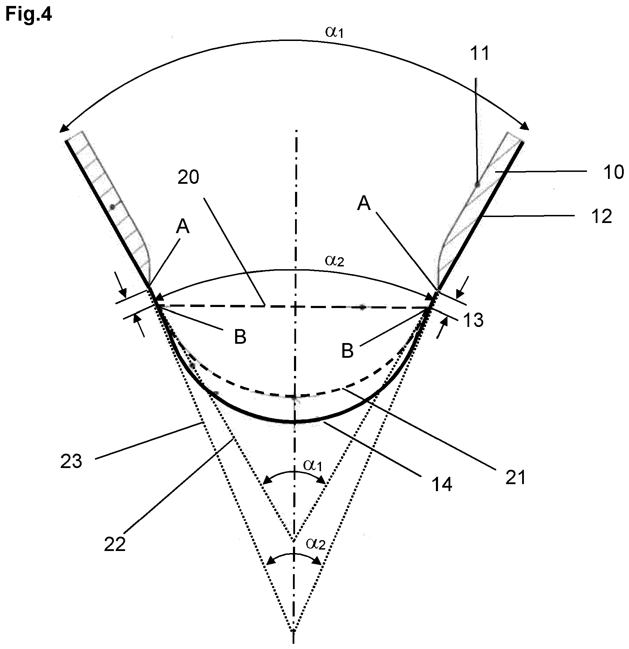

Betrachtet man nun generell eine Zahnlücke einer Hirth-Verzahnung im Normalschnitt, das heißt senkrecht zum Zahngrund, wie es durch die Senkrechte in Fig.2 dargestellt ist, so gibt es einmal die Variante wie sie aus dem Stand der Technik bekannt ist - siehe Fig.3 - und einmal die erfindungsgemäß hergestellte Ausführung - dargestellt in Fig.4 - wie sie bei den Maschinenelementen 1,2 ausgeführt ist.

**Fig.3** zeigt zum besseren Verständnis zunächst den Stand der Technik. Die Zahnlücke wird von den Zahnflanken 5 benachbarter Zähne begrenzt. Der Profilwinkel α1 ist der Öffnungswinkel der Zahnlücke. Im Zahngrund der Zahnlücke sind diese über den Zahnfußbereich 6 verbunden. Der Traganteil der Zahnflanke 5 erstreckt sich zwischen den Gegenkopfkanten 7 zweier benachbarter Zähne beziehungsweise Zahnlücken. Das Spitzenspiel 8 ist der Freiraum zwischen Gegenkopfkante 7 und Zahngrund.

In **Fig.4** ist eine erfindungsgemäß hergestellte Ausführung der Hirth-Verzahnung im Normalschnitt zu sehen. Die Zahnflanken 12 beschreiben die Zahnkontur, das Zahnprofil der fertig geschliffenen Verzahnung und bilden den tragenden Teil der Zähne. Der Profilwinkel in diesem Bereich ist α1. An diese Zahnflanke 12 schließt sich ab dem Punkt A die Sekundärflanke 13 an, die dann im Punkt B kontinuierlich in den Radius des Zahnfußbereichs 14 übergeht. Der Sekundärprofilwinkel α2 ist dabei kleiner als der Profilwinkel α1, was zu einer Kante am Punkt A und im Anschluss zu einem steileren Verlauf führt. Deutlich erkennbar an der angedeuteten Verlängerung 23 der Sekundärflanke und an der Verlängerung 22 der ursprünglichen Zahnflanke. Weiterhin ist zu erkennen, dass der Tragbereich der Zahnflanke 12 etwas gemindert wird, da die Gegenkopfkante 20 in den Bereich der Sekundärflanke 13 hineinragt.

Die Länge der Zahnflanke 12 entlang des Zahnprofils ist die Strecke zwischen dem Punkt A und dem Zahnkopf am oberen Ende der Zahnflanke. Die Länge der Sekundärflanke entlang des Zahnprofils ist die Strecke A-B.

Bei der erfindungsgemäßen Herstellung der Verzahnung wird in der Vorbearbeitung zunächst die Zahnlücke gefräst, bevorzugt mit einem Schaftfräser, der die entsprechende Form abbildet. Das Ergebnis ist die Zahnlücke gemäß der Kontur 11 + 13 + 14. So erhält man das nötige Schleifaufmaß 10 im Bereich der Zahnflanke 12. Nach einer entsprechenden Wärmebehandlung des gesamten Maschinenelements oder nur der Verzahnung sind Sekundärflanke 13 und Zahnfußbereich 14 bereits fertig bearbeitet. Nur die Zahnflanke 12 wird nun durch Fertigbearbeitung, bevorzugt Fertigschleifen auf die exakte Kontur gebracht. Dabei läuft das Werkzeug, die Schleifscheibe, ab dem Punkt A ins Leere, da die Sekundärflanke 13 steiler ist als die Zahnflanke 12. Somit werden Schleifkerben am Ende des Schleifbereichs sicher vermieden. Der maximale Schleifscheibenradius ist mit 21 eingezeichnet.

Bevorzugte Maße für die Geometrie der Zahnkonturen und für das Schleifaufmaß sind zuvor bereits beschrieben worden. Gut geeignet ist die erfindungsgemäße Ausführung für Hirth-Verzahnungen mit einem Außendurchmesser von 50 mm bis zu 1800 mm. Und für Zähnezahlen von 12 bis 1000. Damit können Drehmomenten von 100 Nm bis hin zu 100 kNm sicher übertragen werden.

## Patentansprüche

1. Verfahren zur Herstellung eines Maschinenelements (1,2) welches eine Hirth-Verzahnung (3,4) umfasst, die mehrere zentralsymmetrische Zähne und dazwischenliegende Zahnlücken aufweist, wobei jeder Zahn eine Zahnflanke (12) mit einem Profilwinkel (α1), welche vorgesehen ist, die Last zu tragen, und eine Sekundärflanke (13) mit einem Sekundärprofilwinkel (α2), sowie einen Zahnfußbereich (14) aufweist, wobei die Sekundärflanke (13) kontinuierlich tangential in den Radius des Zahnfußbereichs (14) übergeht und wobei der Sekundärprofilwinkel (α2) kleiner als der Profilwinkel (α1) ist, wobei mehrere Teilschritte ausgeführt werden:
Zunächst werden in der Vorbearbeitung die Zahnlücken durch Fräsen oder Schleifen hergestellt, so dass ein vorbearbeiteter Rohling entsteht,
wobei im Bereich der Zahnflanke (12) nach der Vorbearbeitung und vor dem Fertigbearbeiten ein Schleifaufmaß (10) an Material vorhanden ist, und wobei im Bereich der Sekundärflanke (13) kein Schleifaufmaß nach der Vorbearbeitung und vor der Fertigbearbeitung vorhanden ist;
abschließend folgt die Fertigbearbeitung durch Schleifen als Hartfeinbearbeitung, bei der das Profil der Zähne exakt herausgearbeitet wird, wobei das Werkzeug beim Schleifen den gesamten Bereich der Zahnflanke bearbeitet, das Schleifaufmaß im Bereich der Zahnflanke abträgt und dann ins Leere laufen kann, ohne dass es in Kontakt mit der nachfolgenden Fläche der Sekundärflanke kommt.

2. Verfahren nach Anspruch 1,
**dadurch gekennzeichnet,**
**dass** am vorbearbeiteten Rohling im Zahnfußbereich (14) kein Schleifaufmaß nach der Vorbearbeitung und vor der Fertigbearbeitung vorhanden ist.

3. Verfahren nach Anspruch 1 oder 2,
**dadurch gekennzeichnet,**
**dass** am vorbearbeiteten Rohling das Schleifaufmaß (10) mindestens 0,01 mm, bevorzugt mindestens 0,1 mm, max. jedoch 1 mm beträgt.

4. Verfahren nach einem der vorherigen Ansprüche
**dadurch gekennzeichnet,**
**dass** der Sekundärprofilwinkel (α2) mindestens 5% und höchstens 30%, insbesondere mindestens 10% und höchstens 25%, kleiner als der Profilwinkel (α1) ist.

5. Verfahren nach einem der vorherigen Ansprüche
**dadurch gekennzeichnet,**
**dass** die Sekundärflanke (13) zwischen dem Ende der Zahnflanke (12) und dem Beginn des Radius des Zahnfußbereichs (14) eine Länge von mindestens 0,05 mm, bevorzugt mindestens 0,1 mm, und von höchstens 2 mm, bevorzugt höchstens 0,5 mm, aufweist.

6. Verfahren nach einem der vorherigen Ansprüche
**dadurch gekennzeichnet,**
**dass** der Profilwinkel (α1) im Bereich zwischen einschließlich 35° bis einschließlich 75° liegt.

7. Verfahren nach einem der vorherigen Ansprüche
**dadurch gekennzeichnet,**
**dass** die Länge der Sekundärflanke (13) entlang des Zahnprofils höchstens 20%, bevorzugt höchstens 15% der Länge der Zahnflanke (12) entlang des Zahnprofils beträgt.

8. Verfahren nach einem der vorherigen Ansprüche
**dadurch gekennzeichnet,**
**dass** der Radius im Zahnfußbereich (14) zwischen einschließlich 0,1 mm und einschließlich 10 mm liegt.

9. Verfahren nach einem der vorherigen Ansprüche
**dadurch gekennzeichnet,**
**dass** der vorbearbeitete Rohling vor der Fertigbearbeitung einer Wärmebehandlung und optional einem Oberflächen-Verfestigungsverfahren, insbesondere Kugelstrahlen, unterzogen wird.

## Claims

1. Method for producing a machine element (1, 2) which comprises a Hirth serration (3, 4) having a plurality of centrally symmetrical teeth and intervening tooth gaps, wherein each tooth has a tooth flank (12) with a profile angle (α1), which is provided to support the load, and a secondary flank (13) with a secondary profile angle (α2), and a tooth root region (14), wherein the secondary flank (13) continuously transitions tangentially into the radius of the tooth root region (14), and wherein the secondary profile angle (α2) is smaller than the profile angle (α1), wherein a plurality of sub-steps are carried out:
firstly, the tooth gaps are created during premachining by milling or grinding in such a way that a premachined blank is created,
wherein a grinding allowance (10) in terms of material is present in the region of the tooth flank (12) after premachining and prior to finishing, and wherein there is no grinding allowance present in the region of the secondary flank (13) after premachining and prior to finishing;
finally, finishing is carried out by grinding as a hard fine-machining process in which the profile of the teeth is carved out exactly, wherein the tool machines the entire region of the tooth flank during grinding, removes the grinding allowance in the region of the tooth flank and can then be ineffective without coming into contact with the subsequent area of the secondary flank.

2. Method according to Claim 1,
**characterized in that**
there is no grinding allowance present on the premachined blank in the tooth root region (14) after premachining and prior to finishing.

3. Method according to Claim 1 or 2,
**characterized in that**
the grinding allowance (10) on the premachined blank is at least 0.01 mm, preferably at least 0.1 mm, but at most 1 mm.

4. Method according to one of the preceding claims, **characterized in that**
the secondary profile angle (α2) is at least 5% and at most 30%, in particular at least 10% and at most 25%, smaller than the profile angle (α1).

5. Method according to one of the preceding claims, **characterized in that**
the secondary flank (13) between the end of the tooth flank (12) and the start of the radius of the tooth root region (14) has a length of at least 0.05 mm, preferably at least 0.1 mm, and of at most 2 mm, preferably at most 0.5 mm.

6. Method according to one of the preceding claims, **characterized in that**
the profile angle (α1) is between 35° and 75° inclusive.

7. Method according to one of the preceding claims, **characterized in that**
the length of the secondary flank (13) along the tooth profile is at most 20%, preferably at most 15%, of the length of the tooth flank (12) along the tooth profile.

8. Method according to one of the preceding claims, **characterized in that**
the radius in the tooth root region (14) is between 0.1 mm and 10 mm inclusive.

9. Method according to one of the preceding claims, **characterized in that**
the premachined blank is subjected to heat treatment and optionally to a surface solidification method, in particular shot peening, prior to finishing.

## Revendications

1. Procédé de fabrication d'un élément de machine (1,2) comprenant une denture Hirth (3,4) présentant plusieurs dents à symétrie centrale et des espaces interdentaires situés entre elles, chaque dent présentant un flanc de dent (12) ayant un angle de profil (α1), lequel est prévu pour supporter une charge, et un flanc secondaire (13) ayant un angle de profil secondaire (α2), ainsi qu'une zone de racine de dent (14), le flanc secondaire (13) se prolongeant de manière tangentielle continue dans le rayon de la zone de racine de dent (14) et l'angle de profil secondaire (α2) étant inférieur à l'angle de profil (α1), plusieurs sous-étapes étant exécutées :
tout d'abord, lors du préusinage, les espaces interdentaires sont réalisés par fraisage ou par rectification, de telle sorte qu'une ébauche préusinée est obtenue,
dans la zone du flanc de dent (12), après le préusinage et avant l'usinage de finition, une surépaisseur de rectification (10) de matériau étant présente, et dans la zone du flanc secondaire (13), aucune surépaisseur de rectification n'étant présente après le préusinage et avant l'usinage de finition ;
enfin, l'usinage de finition ayant lieu par rectification en tant qu'usinage de précision dur, lors duquel le profil des dents est exactement réalisé, l'outil, lors de la rectification, usinant l'ensemble de la zone du flanc de dent, enlevant la surépaisseur de rectification dans la zone du flanc de dent, puis pouvant tourner à vide sans entrer en contact avec la surface suivante du flanc secondaire.

2. Procédé selon la revendication 1,
**caractérisé**
**en ce que**, sur l'ébauche préusinée, dans la zone de racine de dent (14), aucune surépaisseur de rectification n'est présente après le préusinage et avant l'usinage de finition.

3. Procédé selon la revendication 1 ou 2,
**caractérisé**
**en ce que**, sur l'ébauche préusinée, la surépaisseur de rectification (10) est d'au moins 0,01 mm, de préférence d'au moins 0,1 mm, mais au maximum de 1 mm.

4. Procédé selon l'une quelconque des revendications précédentes,
**caractérisé**
**en ce que** l'angle de profil secondaire (α2) est d'au moins 5 % et d'au plus 30 %, en particulier d'au moins 10 % et d'au plus 25 %, inférieur à l'angle de profil (α1).

5. Procédé selon l'une quelconque des revendications précédentes,
**caractérisé**
**en ce que** le flanc secondaire (13) entre l'extrémité du flanc de dent (12) et le début du rayon de la zone de racine de dent (14) présente une longueur d'au moins 0,05 mm, de préférence d'au moins 0,1 mm, et d'au plus 2 mm, de préférence d'au plus 0,5 mm.

6. Procédé selon l'une quelconque des revendications précédentes,
**caractérisé**
**en ce que** l'angle de profil (α1) est compris dans la zone entre 35° et 75° inclus.

7. Procédé selon l'une quelconque des revendications précédentes,
**caractérisé**
**en ce que** la longueur du flanc secondaire (13) le long du profil de dent représente au plus 20 %, de préférence au plus 15 %, de la longueur du flanc de dent (12) le long du profil de dent.

8. Procédé selon l'une quelconque des revendications précédentes,
**caractérisé**
**en ce que** le rayon dans la zone de racine de dent (14) est compris entre 0,1 mm inclus et 10 mm inclus.

9. Procédé selon l'une quelconque des revendications précédentes,
**caractérisé**
**en ce que** l'ébauche préusinée est soumise à un traitement thermique et éventuellement à un procédé de durcissement superficiel, en particulier à un grenaillage, avant l'usinage de finition.
